(19) Europäisches Patentamt
European Patent Office
Office européen des brevets

(11) Veröffentlichungsnummer: **0 043 022**
**B1**

(12) **EUROPÄISCHE PATENTSCHRIFT**

(45) Veröffentlichungstag der Patentschrift: **08.08.84**

(51) Int. Cl.³: **C 08 F 255/00,** C 08 F 283/00

(21) Anmeldenummer: **81104607.7**

(22) Anmeldetag: **15.06.81**

(54) **Modifizierte Olefinpolymerisate.**

(30) Priorität: **25.06.80 DE 3023822**

(43) Veröffentlichungstag der Anmeldung: **06.01.82 Patentblatt 82/1**

(45) Bekanntmachung des Hinweises auf die Patenterteilung: **08.08.84 Patentblatt 84/32**

(84) Benannte Vertragsstaaten: **DE FR GB IT**

(56) Entgegenhaltungen:
**DE - A - 2 903 135**
**FR - A - 1 420 772**
**FR - A - 2 258 422**

(73) Patentinhaber: **BAYER AG, Konzernverwaltung RP Patentabteilung, D-5090 Leverkusen 1 Bayerwerk (DE)**

(72) Erfinder: **Waniczek, Helmut, Dr., Wolfskaul 2, D-5000 Koeln (DE)**
Erfinder: **Süling, Carlhans, Dr., Carl-Leverkus-Strasse 10, D-5068 Odenthal (DE)**
Erfinder: **Lindner, Christian, Dr., Riehler Strasse 200, D-5000 Koeln 60 (DE)**
Erfinder: **Bartl, Herbert, Dr., Eichendorff-Weg 10, D-5068 Odenthal (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft modifizierte Olefinpolymerisate, in denen Olefin-Homo- oder Copolymerisate durch polymerisierte Einheiten olefinische Doppelbindungen enthaltender Monomere mit Polyesterblöcke enthaltenen Polymeren chemisch verbunden sind. Pfropfpolymerisate von olefinische Doppelbindungen enthaltenden Monomeren auf Polyolefine sind bekannt, zum Beispiel Polypropylen, auf welches polare olefinische Monomere gepfropft sind (vergl. FR-PS 1 420 772). Diese Produkte enthalten jedoch keine plastifizierende Polyesterkomponente.

Gemäß DE-OS 2 903 135 werden ungesättigte Polyester, z. B. aus Propylenglykol und Maleinsäure mit konjugierten Dienbutylelastomeren in Anwesenheit eines polymerisierbaren Monomeren (z. B. Styrol) an Radikalinitiatoren umgesetzt. Konjugierte Dienbutylelastomere ist dabei die Bezeichnung für Produkte, die Copolymere von Isobutylen und Isopren darstellen, worin aber in den Struktureinheiten beide Doppelbindungen des Isoprens erhalten geblieben sind. Die Formmassen der DE-OS 2 903 135 sind ungesättigte Polyesterformmassen, also Duroplaste, z. B. härtende Gießharze, die sich nicht thermoplastisch verarbeiten lassen.

Gemäß der FR-PS 2 258 422 werden Vinylchlorid oder mindestens 70% Vinylchlorid enthaltende Monomerengemische in Anwesenheit von Polycarbonat polymerisiert. Die Produkte können noch mit Kautschuk oder kautschukmodifizierten Harzen gemischt werden.

Gegenstand dieser Erfindung ist ein Verfahren zur Herstellung modifizierter Olefinpolymerisate, das dadurch gekennzeichnet ist, daß man 20 bis 98 Gew.-Teile eines Olefinhomo- oder -coplymerisats, 0,5 bis 80 Gew.-Teile eines aliphatische Polyesterblöcke enthaltenden Polymerisats und 0,5 bis 40 Gew.-Teile eines olefinische Doppelbindungen enthaltenden Monomeren in Anwesenheit radikalischer Initiatoren bei 50 bis 250° C in Abwesenheit von Lösungsmitteln polymerisiert.

Ein weiterer Gegenstand der Erfindung sind modifizierte Olefinpolymerisate aus 20 bis 98 Gew.-Teilen eines Olefinhomo- oder copolymerisats und 0,5 bis 80 Gew.-Teilen eines aliphatische Polyesterblöcke enthaltenden Polymerisats, die durch 0,5 bis 40 Gew.-Teile eines Strukturelements der Formel

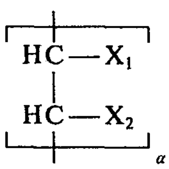

chemisch miteinander verknüpft sind.

Die modifizierten Olefinpolymerisate können also durch die Struktur I charakterisiert werden

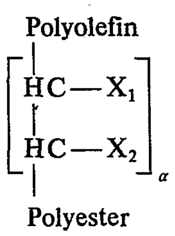

(I)

worin $X_1$, $X_2$ und $\alpha$ die unten angegebene Bedeutung haben.

Spezielle modifizierte Olefinpolymerisate zeigt die Formel (II)

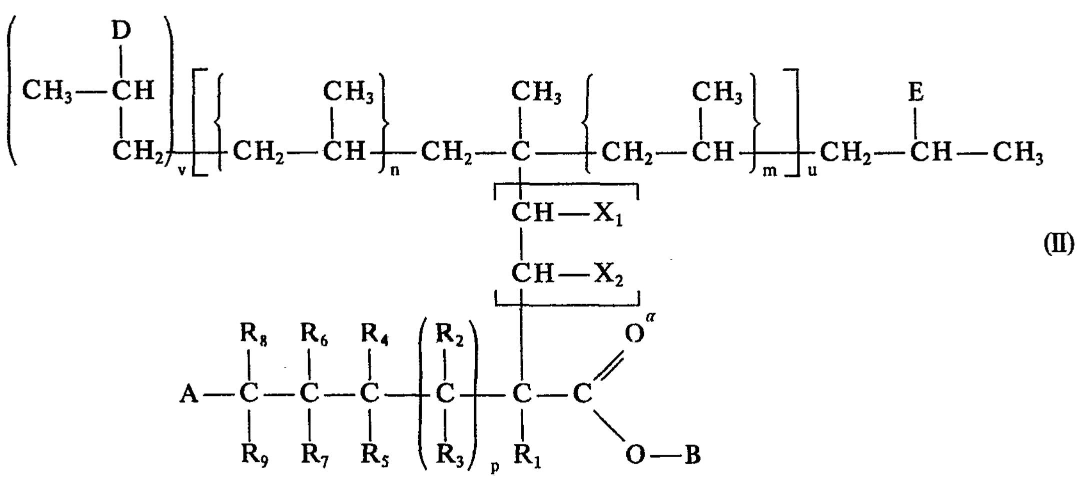

(II)

v = 1 bis 15 000
n = 0 bis 15 000
m = 0 bis 15 000
$\alpha$ = 1 bis 1 000
u = 1 bis 4
p = 1 bis 4

worin

$X_1$ und $X_2$ unabhängig voneinander H, $C_1$—$C_4$-Alkyl, Halogen (wie Chlor), COOH oder ein Derivat davon (wie Ester, Anhydrid, Nitril oder Carbonamid) oder Acyloxy (wie Acetyloxy, Propionyloxy oder Benzoyloxy);
$R_1$ bis $R_9$ unabhängig voneinander H, Alkyl, Aryl oder Alkylaryl (bevorzugt $C_1$—$C_4$-Alkyl oder Aryl, gegebenenfalls mit $C_1$—$C_4$-Alkyl substituiert),
A und B unabhängig voneinander Polyester- oder Polyetherreste und
D und E unabhängig voneinander die bei der stereospezifischen Polymerisation von $\alpha$-Olefinen auftretenden Endgruppen bedeuten.

Die Polyester- oder Polyetherketten A und B sind bevorzugt Polyalkylenoxydketten, die durch Polymerisation beispielsweise von Ethylenoxyd, Propylenoxyd, Tetrahydrofuran oder deren Mischungen erhalten worden sind, oder Polyesterketten, die durch Polykondensation von Dicarbonsäuren mit Diolen oder durch Kondensation von Dicarbonsäurederivaten (wie Estern, Chloriden oder Anhydriden) mit Diolen erhalten worden sind, sowie Polyadditionsprodukte von Lactonen, z. B. Caprolacton.

Olefinhomo- und -copolymerisate im Sinne der Erfindung sind bevorzugt Homopolymerisate von $C_2$—$C_8$-Olefinen oder Copolymerisate verschiedener $C_2$—$C_8$-Olefine oder Copolymerisate von $C_2$—$C_8$-Olefinen mit anderen Monomeren, z. B. Vinylestern (Vinylacetat oder Propionat), Kohlenmonoxyd, Maleinsäureanhydrid oder Styrol. Der Anteil im Polymerisat an derartigen Monomerbausteinen soll nicht über 50 Gew.-% sein. Besonders geeignet ist Polypropylen mit einem isotaktischen Anteil über 90% (bestimmt durch NMR-Spektroskopie an einer Lösung des Polypropylens in Trichlorbenzol) und mit einem Schmelzindex (IMI) von 5 bis 20 g pro 10 min, bevorzugt 5 bis 15 g pro 10 min, gemessen bei 230° C und 2,16 kg Belastung. Polypropylene dieser Beschaffenheit sind handelsüblich.

Aliphatische Polyesterblöcke enthaltende Polymerisate sind z. B.

a) Carbonatgruppen enthaltende Polyester, die aus wiederkehrenden Struktureinheiten der folgenden Formel aufgebaut sind:

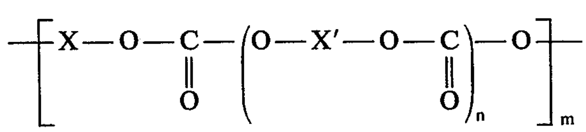

X = Rest eines Umsetzungsproduktes eines mehrwertigen Alkohols mit einer mehrwertigen aliphatischen Carbonsäure;
X' = X oder Rest eines aliphatischen Polyesters;
n = 0 oder 1 bis 10;
m = Zahl > 10;

Carbonatgruppen enthaltende Polyester sind bekannt und z. B. in DE-OS 2 732 718 beschrieben. Sie werden durch katalytische Umsetzung von Polyesterdiolen mit Diarylcarbonaten bei erhöhter Temperatur hergestellt; oder

b) Urethangruppen-haltige Polyester, die z. B. durch Umsetzung von aliphatischen, gesättigten Polyesterdiolen mit Diisocyanaten zugänglich sind.
Derartige Produkte sind bekannt und in der DE-AS 1 193 241 als Komponenten von Kunststoffen beschrieben; oder

c) Blockcopolymere aus aliphatischen Polyesterblöcken und Polyetherblöcken oder aromatischen Polyesterblöcken oder aromatischen oder aliphatischen Polycarbonatblöcken; derartige Produkte sind bekannt; oder

d) aliphatische gesättigte Polyester selbst mit Molekulargewichten von ~600 bis 10 000; oder

e) aliphatische oder aliphatisch-aromatische Polyurethane selbst, welche normalerweise durch Umsetzung von Diolen mit Diisocyanaten hergestellt werden; solche Produkte sind ebenfalls bekannt.

Geeignete olefinische Doppelbindungen enthaltende Monomere sind z. B.: Vinylmonomere und Vinylidenmonomere wie Vinylacetat, Vinylchlorid, Vinylphenyldisiloxan, 2- und 4-Vinylpyridin, Vinylpyrrolidon, Vinylcarbazol, sowie Divinylmonomere wie Divinylbenzol, 2,3-Divinylpyridin, Divinylsulfon

und 2,5-Divinyl-6-methylpyridin, Acryl- und Methacrylsäuren sowie deren Derivate, z. B. Amide und Nitrile, sowie Ester, in denen die Alkylgruppen 1 bis 8 Kohlenstoffatome enthalten, wie Ethyl-, Propyl-, Butyl-, Amyl-, Hexyl-, Heptyl- und Octylacrylsäure, Phenylacrylsäure, Vinylacrylsäure und dergleichen, Acrylatmonomere wie Methylacrylat, Methylmethacrylat, Ethylacrylat, Butylmethacrylat, Butylacrylat, Acrylamid, 2-Hydroxyethylacrylat, 2-Hydroxyethylmethacrylat, Alkylamino-, Dialkylaminoacrylate und dergleichen, Styrol und verschiedene Derivate hiervon, wie $\alpha$-Methylstyrol, Chlorstyrol, Dichlorstyrol, Di- oder Trimethylstyrol und polymerisierbare Monomere, die Carboxylsäureester oder Anhydridgruppen enthalten, wie Maleinsäureanhydrid, Fumarsäure, Krotonsäure, Itaconsäure und -anhydrid, Maleinamid und Fumarate wie Di-ethylfumarat und Dioctylfumarat.

Bevorzugt sind Styrol, Vinylacetat, Acrylnitril, Methylmethacrylat, Ethyl- und Butylacrylat sowie Diisobutylen und insbesondere Vinylester, z. B. Vinylacetat oder -propionat.

Radikalische Initiatoren sind bevorzugt Luftsauerstoff, Peroxide und Azoverbindungen. Beispiele für Peroxide sind Dialkyl-, Diacyl- und Hydroperoxide. Die Dialkylperoxide haben die allgemeine Struktur R—OO—R', wobei R und R' gleich oder verschieden sein können, primäre, sekundäre oder tertiäre Alkyl-, Cycloalkyl- oder Oxalkylgruppen sein können. Solche Peroxide sind z. B. Dicumylperoxid, Di-t-butylperoxid, t-Butylcumylperoxid oder 2,5-Dimethyl-2,5-bis-(t-butyl-peroxi)hexan.

Diacylperoxide besitzen die allgemeine Struktur RC(O)OOC(O)R', wobei R und R' gleich oder verschieden sein können, wie Alkyl-, Oxalkyl-, Aryl-, Cycloalkyl- oder heterocyclische Reste. Beispiele für Diacylperoxide sind Dilaurylperoxid, Dibenzoylperoxid, Diacetylperoxid und 2-Methylpentanoylperoxid.

Hydroperoxide sind Verbindungen der allgemeinen Formel R-OOH, wobei R ein Alkyl-, Oxalkyl- oder Cycloalkylrest sein kann. Es sind auch Peroxide verwendbar, wie Methylethylketonperoxid, Cyclohexanonperoxid oder t-Butylperoctoat und t-Butylperbenzoat. Bevorzugt werden Peroxide verwendet, wie Di-t-Butylperoxid, t-Butylperbenzoat und Diacetylperoxid.

Beispiele für Azoverbindungen sind Diazoaminobenzol, N,N'-Dichlorazodicarbonamid, Azo-bis-(carbonsäureester), Azo-bis-(isobutyronitril) und 1-Cyano-1-(t-butylazo)-cyclohexanon.

Die erfindungsgemäßen modifizierten Olefinpolymerisate enthalten 0,5 bis 80 Gew.-Teile, bevorzugt 1 bis 50 Gew.-Teile und insbesondere 5 bis 20 Gew.-Teile, des aliphatischen Polyesterblöcke enthaltenden Polymerisats; die Menge des Olefinhomo- oder -cpolymerisates ist 20 bis 98 Gew.-Teile, bevorzugt 60 bis 95 Gew.-Teile; außerdem sind vorhanden 0,5 bis 40 Gew.-Teile, bevorzugt 0,5 bis 10 Gew.-Teile, des Strukturelements der Formel

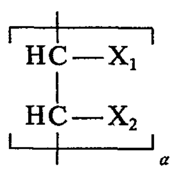

Zur Herstellung der modifizierten Olefinpolymerisate kann man die Komponenten in der Schmelze mischen und mit Hilfe von Radikalinitiatoren polymerisieren. Radikalinitiatoren werden bevorzugt in Mengen von 0,1 bis 3 Gew.-%, bezogen auf die Gesamtmenge der Reaktanten, eingesetzt. Die Polymerisationstemperatur ist normalerweise 50 bis 250° C, vorzugsweise 100 bis 220° C. Als Reaktoren sind Hochviskosreaktoren, besonders Kneter und Ein- oder Mehrwellenextruder bevorzugt. Während der Polymerisation können, falls erforderlich, übliche Hilfsstoffe, wie Lösungsvermittler, Weichmacher, Gleitmittel oder Hilfslösungsmittel zugegeben werden. Es kann von Vorteil sein, unter Überdruck und gegebenenfalls unter Schutzgasen wie Stickstoff oder einem Edelgas zu polymerisieren.

Die erfindungsgemäßen modifizierten Olefinpolymerisate sind Pfropfcopolymere der beiden Polymerkomponenten, die durch Brücken aus Polymerketten der jeweils zugesetzten olefinischen Monomeren verknüpft sind. Bei der radikalischen Polymerisation wachsen einerseits Polymerisate auf den Basispolymeren auf, welche durch Rekombination Polymerbrücken bilden, andererseits können die radikalischen Enden der Pfropfäste durch Übertragungsreaktion mit einer anderen Polymerkette reagieren. Dadurch kommt es neben Verbrückungen zwischen gleichartigen Makromolekülen auch zu Brücken zwischen der Polyolefin- und der Polyesterkomponente. Diese chemische Verknüpfung ergibt insgesamt eine verbesserte Verträglichkeit, wodurch technisch interessante Eigenschaften erhalten werden. Die erfindungsgemäßen Polymerisate sind Thermoplasten und deshalb dort einsetzbar, wo Polypropylen verwendet wird, sind aber besser verarbeitbar. Zum Beispiel treten beim Extrudieren der Materialien wesentlich geringere Drehmomente als bei üblichen Polypropylenen auf.

## Beispiel 1

Die Figur 1 zeigt schematisch den als Reaktor benutzten Zweiwellenextruder. Es bedeuten:

(1) Aufschmelzzone
(2) Polymerisationszone
(3) Ausdampfzone
(4) Austrag
(5) Polymereinlaß
(6) Monomereinlaß
(7) Entgasung
(8) Austrag
(9) Innentemperaturen

Die Zahlen unter der Figur geben das Temperaturprofil in °C an.

Ein Doppelwellenextruder (siehe Skizze) wird mit 1500 g/h einer Mischung aus 98 Gew.-% Polypropylen und 2 Gew.-% über Carbonatgruppen verlängerten Polyesters beschickt. Nach der Aufschmelzzone wird durch eine Bohrung 180 ml/h einer Lösung von 1,0 g Di-tert.-butylperoxid in 200 ml Vinylacetat in die Polymerschmelze eingedrückt. An die Polymerisationszone folgt die Ausdampfzone, wo überschüssiges Monomer durch Vakuum abgezogen wird. Das entstehende Copfropfpolymerisat wird an der Düse abgezogen und granuliert, das entmonomerisierte Reaktionsprodukt hat folgende Kenngrößen:

$$\text{Schmelzindex: } 1{,}69 \ \frac{g}{10\,\text{Min.}\,2{,}16\,\text{kg}} \ \text{bei } 190°\,\text{C. O-Gehalt } 0{,}35\,\%.$$

Die Copfropfung wurde durch Fraktionierung nachgewiesen.

## Beispiel 2

Ein ölbeheizter Kneter mit 5 l Fassungsvermögen wird mit

2760 g Polypropylen und
240 g über Carbonatgruppen verlängertem Polyester beschickt. Es wird unter Kneten auf 170°C aufgeheizt. In den dicht verschlossenen Kneter wird nun binnen einer Stunde eine Lösung von
0,4 g Di-tert.-butylperoxid in
80 g Vinylacetat zugepumpt. Danach wird noch 10 Minuten bei 170°C geknetet, entspannt und der Kneter entleert.

Das Reaktionsprodukt hat einen Schmelzindex von

$$2{,}12 \ \frac{g}{10\,\text{Min.}\,2{,}16\,\text{kg}} \ \text{bei } 190°\,\text{C. O-Gehalt } 0{,}88\,\%.$$

Die Copfropfung wurde durch Fraktionierung bestimmt (Methode der entmischenden Flüssigkeiten nach R. Kuhn, Makromol. Chem. 177, 1525—1547 [1976]).

Tabelle 1

| | $KZ_{23}$ k3/m² | RF MPa | D/RF % | KH n/mm² | BF N/mm² | Vicattemp. °C |
|---|---|---|---|---|---|---|
| Beispiel 1 | 5,13 | 23,09 | 436 | 60,1 | 46,91 | 78 |
| Beispiel 2 | 5,70 | 22,35 | 366 | 52,7 | 36,42 | 72 |
| Polypropylen | 2,91 | 21,32 | 83,7 | 60,3 | 43,04 | 80 |

$KZ_{23}$ Kerbschlagzähigkeit bei 23°C (Normkleinstab)
RF Reißfestigkeit (Schulterstab)
D/RF Reißdehnung
KH Kugeldruckhärte
BF Biegefestigkeit

Die Prüfkörper wurden mit einer elektrisch beheizten Kunststoffpresse bei 190°C hergestellt.

**Patentansprüche**

1. Modifizierte Olefinpolymerisate aus 20 bis 98 Gew. -Teilen eines Olefinhomo- oder -copolymerisats und 0,5 bis 80 Gew.-Teilen eines aliphatische Polyesterblöcke enthaltenden Polymerisats, die durch 0,5 bis 40 Gew.-Teile eines Strukturelements der Formel

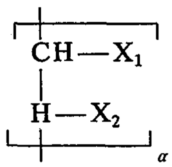

verknüpft sind, worin

| | |
|---|---|
| $\alpha$ | 1 bis 1000 und |
| $X_1$ und $X_2$ | unabhängig voneinander, H, $C_1$—$C_4$-Alkyl, Halogen, COOH oder ein Derivat davon oder Acyloxy |

bedeuten.

2. Modifizierte Olefinpolymerisate gemäß Anspruch 1 der Formel II

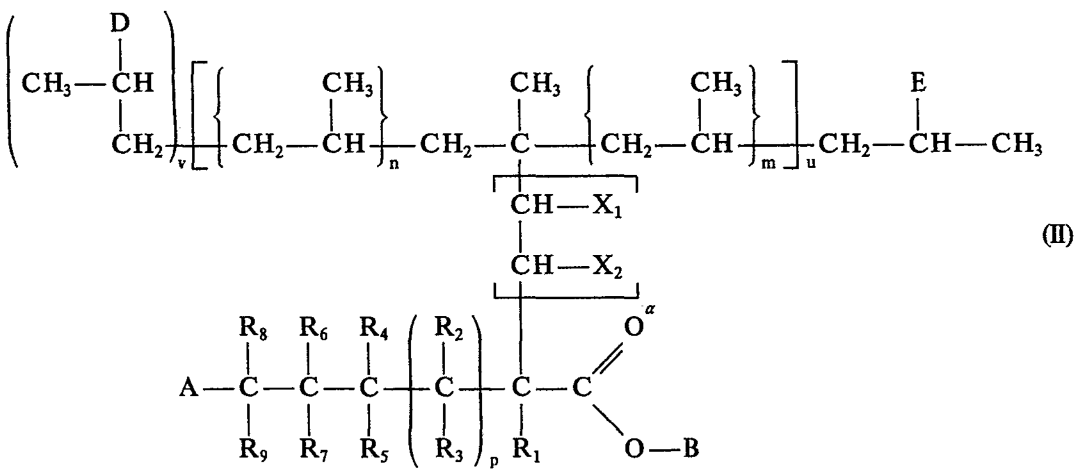

(II)

v = 1 bis 15 000
n = 0 bis 15 000
m = 0 bis 15 000
$\alpha$ = 1 bis 1 000
u = 1 bis 4
p = 1 bis 4

worin

| | |
|---|---|
| $X_1$ und $X_2$ | unabhängig voneinander, H, $C_1$—$C_4$-Alkyl, Halogen (wie Chlor), COOH oder ein Derivat davon (wie Ester, Anhydrid, Nitril oder Carbonamid) oder Acyloxy (wie Acetyloxy, Propionyloxy oder Benzoyloxy); |
| $R_1$ bis $R_9$ | unabhängig voneinander, H, Alkyl, Aryl oder Alkylaryl (bevorzugt $C_1$—$C_4$-Alkyl oder Aryl, gegebenenfalls mit $C_1$—$C_4$-Alkyl substituiert), |
| A und B | unabhängig voneinander, Polyester- oder Polyetherreste, und |
| D und E | unabhängig voneinander, die bei der stereospezifischen Polymerisation von $\alpha$-Olefinen auftretenden Endgruppen |

bedeuten.

3. Verfahren zur Herstellung modifizierter Olefinpolymerisate gemäß Anspruch 1, dadurch gekennzeichnet, daß man 20 bis 98 Gew.-Teile eines Olefinhomo- oder -copolymerisats, 0,5 bis 80 Gew.-Teile eines aliphatische Polyesterblöcke enthaltenden Polymerisats und 0,5 bis 40 Gew.-Teile eines olefinische Doppelbindungen enthaltenden Monomeren in Anwesenheit radikalischer Initiatoren bei 50 bis 250° C in Abwesenheit von Lösungsmitteln polymerisiert.

## Claims

1. Modified olefin polymers of 20 to 98 parts by weight of an olefin homo- or co-polymer and 0.5 to 80 parts by weight of a polymer containing aliphatic polyester blocks, which are linked by 0.5 to 40 parts by weight of a structural element of the formula

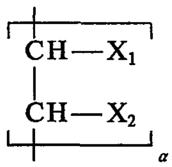

wherein

$\alpha$ denotes 1 to 1000 and

$X_1$ and $X_2$ independently of one another, denote H, $C_1-C_4$-alkyl, halogen, COOH or a derivative thereof or acyloxy.

2. Modified olefin polymers according to claim 1 of the formula II

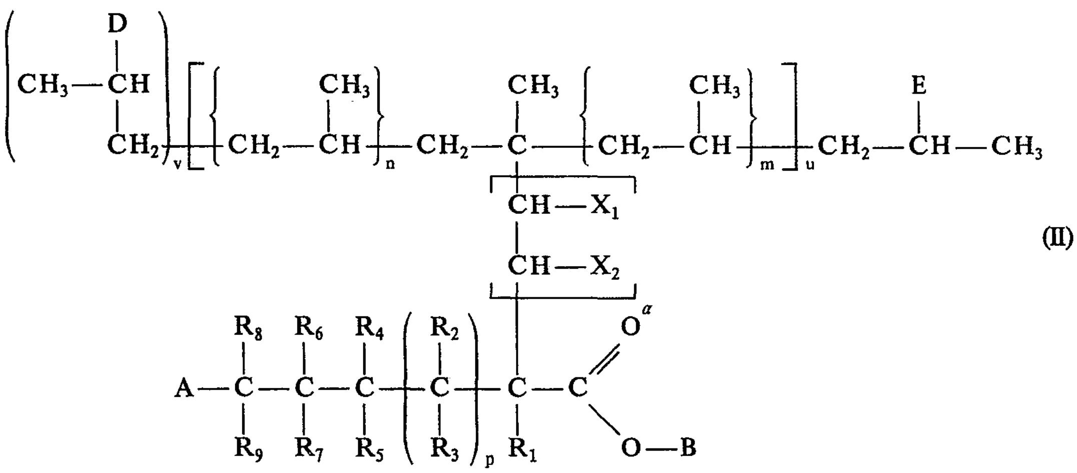

(II)

v = 1 to 15 000
n = 0 to 15 000
m = 0 to 15 000
$\alpha$ = 1 to 1 000
u = 1 to 4
p = 1 to 4,

wherein

$X_1$ and $X_2$, independently of one another, denote H, $C_1-C_4$-alkyl, halogen (such as chlorine), COOH or a derivative thereof (such as an ester, anhydride, nitrile or carbonamide) or acyloxy (such as acetyloxy, propionyloxy or benzoyloxy);

$R_1$ to $R_9$, independently of one another, denote H, alkyl, aryl or alkylaryl (preferably $C_1-C_4$-alkyl or aryl, optionally substituted with $C_1-C_4$-alkyl),

A and B, independently of one another, denote polyester or polyether groups, and

D and E, independently of one another, denote the end groups formed in the stereospecific polymerisation of $\alpha$-olefins.

3. Process for the preparation of modified olefin polymers according to claim 1, characterized in that 20 to 98 parts by weight of an olefin homo- or co-polymer, 0.5 to 80 parts by weight of a polymer containing aliphatic polyester blocks and 0.5 to 40 parts by weight of a monomer containing olefinic double bonds are polymerised in the presence of radical initiators at 50 to 250°C in the absence of solvents.

**Revendications**

1. Polymères oféfiniques modifiés formés de 20 à 98 parties en poids d'un homopolymère ou d'un copolymère oléfinique et de 0,5 à 80 parties en poids d'un polymère comportant des séquences de polyester aliphatique, qui sont liés par 0,5 à 40 parties en poids d'un motif structural de formule

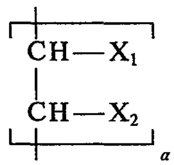

dans laquelle

$\alpha$ 1 à 1000 et

$X_1$ et $X_2$, indépendamment l'un de l'autre, désignent H, un groupe alkyle en $C_1$ à $C_4$, un halogène, un groupe COOH ou un dérivé de ce groupe ou un groupe acyloxy.

2. Polymères oléfiniques modifiés suivant la revendication 1, de formule II

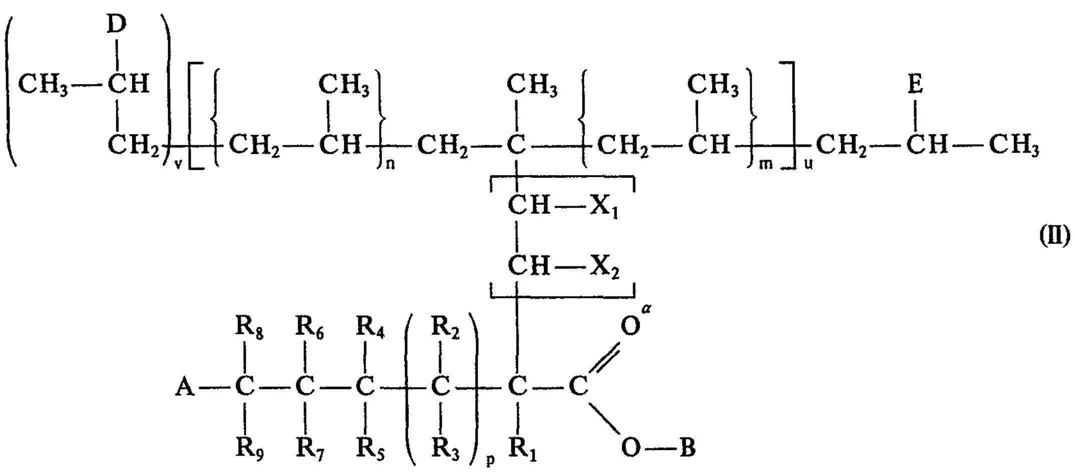

(II)

dans laquelle

v = 1 à 15 000
n = 0 à 15 000
m = 0 à 15 000
$\alpha$ = 1 à 1 000
u = 1 à 4
p = 1 à 4

$X_1$ et $X_2$, indépendamment l'un de l'autre, représentent H, un groupe alkyle en $C_1$ à $C_4$, un halogène (tel que le chlore), un groupe COOH ou un dérivé de ce groupe (tel qu'ester, anhydride, nitrile ou carboxamide) ou un groupe acyloxy (tel qu'acétyloxy, propionyloxy ou benzoyloxy);

$R_1$ à $R_9$, indépendamment l'un de l'autre, représentent H, un groupe alkyle, aryle ou alkylaryle (de préférence alkyle en $C_1$ à $C_4$ ou aryle, éventuellement substitué avec un radical alkyle en $C_1$ à $C_4$),

A et B, indépendamment l'un de l'autre, sont des restes polyester ou polyéther et

D et E, indépendamment l'un de l'autre, désignent les groupes terminaux apparaissant dans la polymérisation stéréospécifique d'$\alpha$-oléfines.

3. Procédé de production de polymères oléfiniques modifiés suivant la revendication 1, caractérisé en ce qu'on polymérise 20 à 98 parties en poids d'un homopolymère ou d'un copolymère oléfinique, 0,5 à 80 parties en poids d'un polymère portant des séquences de polyester aliphatique et 0,5 à 40 parties en poids d'un monomère oléfinique présentant des doubles liaisons, en présence d'initiateurs radicalaires à 50—250° C, en l'absence de solvants.

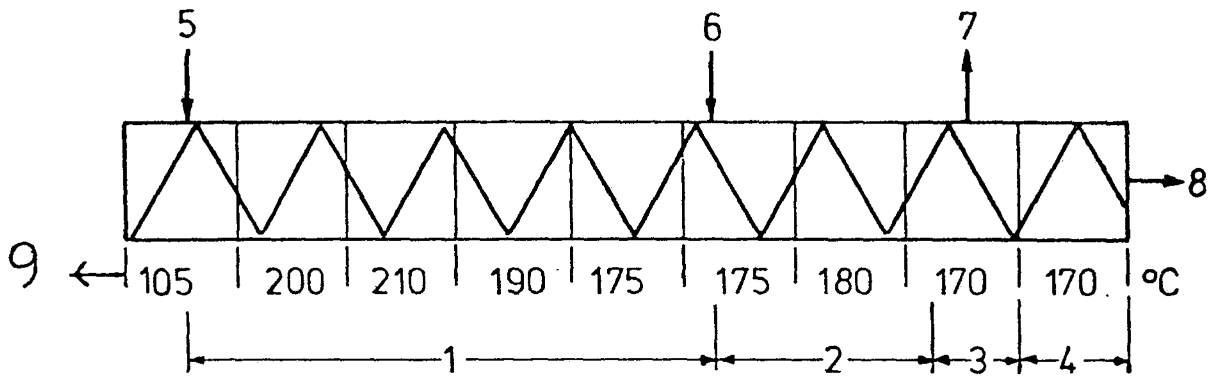

5
6
7
8
9
105
200
210
190
175
175
180
170
170
°C
1
2
3
4